Europäisches Patentamt

European Patent Office

Office européen des brevets

(11) Numéro de publication: **0 131 669**
**B1**

(12) **FASCICULE DE BREVET EUROPEEN**

(45) Date de publication du fascicule du brevet: **18.05.88**

(21) Numéro de dépôt: **83401462.3**

(22) Date de dépôt: **13.07.83**

(51) Int. Cl.⁴: **A 21 C 15/00, A 21 C 5/00**

(54) Appareil extrudeur pour matière tendre et plastique.

(43) Date de publication de la demande:
**23.01.85 Bulletin 85/04**

(45) Mention de la délivrance du brevet:
**18.05.88 Bulletin 88/20**

(84) Etats contractants désignés:
**AT BE CH DE FR GB IT LI LU NL SE**

(56) Documents cités:
**FR-A-2 048 694**
**GB-A- 574 562**

(73) Titulaire: **NABISCO BRANDS INC.**
**Nabisco Brands Plaza**
**Parsippany New Jersey 07054 (US)**

(72) Inventeur: **Pinto, Albert Anthony**
**6 Willows Lane**
**White Plains New York 10605 (US)**
Inventeur: **Ryder, George**
**8 Lakeview Drive**
**West Orange New Jersey 07052 (US)**

(74) Mandataire: **Bonnetat, Christian et al**
**Cabinet PROPI Conseils 23 rue de Léningrad**
**F-75008 Paris (FR)**

Courier Press, Leamington Spa, England.

## Description

La présente invention est relative à un appareil d'extrusion et elle concerne plus particulièrement un appareil pour extruder des matières tendres et plastiques.

Dans la fabrication des biscuits-sandwichs, tels que des galettes-sandwichs, des biscuits individuels sont disposés en rangées sur un transporteur qui passe sous un cylindre extrudeur de remplissage. Le cylindre extrudeur laisse échapper une tranche d'une garniture extrudée, telle qu'un glaçage sur chaque biscuit. Le second biscuit est ensuite ajouté pour terminer le sandwich.

Les cylindres extrudeurs utilisés dans le passé sont du type représenté dans le brevet US—A—2.868.141. Dans ceux-ci un cylindre massif est équipé de plusieurs rangées circonférentielles de pistons espacés qui effectuent un mouvement de va-et-vient dans des alésages radiaux qui coupent la surface externe du cylindre.

Une trémie contenant une matière de garniture est disposée au-dessus du cylindre. L'embouchure de la trémie est en contact avec la paroi incurvée du cylindre, découvrant séquentiellement les alésages sur la matière de remplissage au fur et à mesure que le cylindre tourne.

Lorsqu'ils franchissent l'embouchure de la trémie, les pistons sont tirés en arrière par un mécanisme à came pour aspirer une portion de garniture dans l'alésage. Lorsque les pistons sont portés vers le bas en direction du transporteur, ils sont avancés pour découvrir la portion de garniture. Un fil métallique tendu tranche une section de la portion, en lui permettant de tomber sur le biscuit.

La construction de ce type est coûteuse en ce qu'elle nécessite de nombreux organes dont quelques uns doivent être réalisés à des dimensions précises. Par exemple, le piston extrudeur doit être exactement ajusté dans l'alésage dans lequel il coulisse.

En raison de la complexité et de la précision du mécanisme, le nettoyage périodique de l'appareil nécessite un démontage approfondi et est par conséquent coûteux. De plus, le remplacement d'organes brisés et usés est devenu un facteur coûteux notable lors de l'utilisation d'un tel agencement compliqué.

Une limitation très importante de l'extrudeur du type à piston consiste en ce qu'un tel mécanisme peut être utilisé seulement pour extruder des portions circulaires de garniture. Dans la pratique, un ajustage serré entre le piston et l'alésage peut être obtenu seulement avec des configurations circulaires. Par conséquent, si le remplissage doit être co-extensif avec les biscuits, cet appareil peut être utilisé seulement pour la fabrication de sandwichs circulaires.

Une autre limitation importante de ce type d'extrudeuse est que l'épaisseur de la portion extrudée ne peut être modifiée sans effectuer des modifications importantes dans les mécanismes.

Par ailleurs, par le document FR—A—2 048 694, on connaît déjà un appareil d'extrusion comprenant:

— un cylindre rotatif creux pourvu d'une pluralité d'orifices d'extrusion espacés circonférentiellement;

— un dispositif incurvé stationnaire disposé dans le cylindre; et

— un tube agencé pour amener la matière d'extrusion à l'intérieur dudit cylindre creux.

Le but de la présente invention est de fournir un ensemble perfectionné de cylindre d'extrusion qui soit peu coûteux, simple, souple et facile à entretenir.

A ces fins, selon l'invention, l'appareil d'extrusion du type décrit ci-dessus est caractérisé en ce que:

— le dispositif incurvé stationnaire comporte une base espacée de la paroi interne du cylindre creux et une pluralité de portées en saillie qui s'étendent entre la base et la paroi interne, les espaces entre des paires adjacentes de portées en saillie définissant des passages alignés avec les orifices d'extrusion de manière à amener la matière d'extrusion par rotation du cylindre creux auxdits passages;

— chacun des passages du dispositif incurvé stationnaire est pourvu d'un moyen de retenue qui est réglable individuellement, qui est mobile par rapport au dispositif incurvé stationnaire et qui s'étend dans ledit passage de manière à former un étranglement dans ce passage, étranglement variable par déplacement dudit moyen de retenue par rapport au dispositif incurvé stationnaire et servant à accroître la pression de la matière d'extrusion amenée à chacun des passages de sorte que la matière d'extrusion est forcée à travers les orifices d'extrusion lorsque ceux-ci passent le long desdits passages.

De préférence, le cylindre creux est monté sur un arbre mené de façon à tourner autour de son axe longitudinal.

Avantageusement, la base de chacun des passages comporte une ouverture agencée pour s'adapter au moyen de retenue ajustable associé, et chaque moyen de réglage comporte un arbre rotatif relié au moyen de retenue ajustable associé, cet arbre s'étendant à l'extérieur du cylindre rotatif pour permettre le réglage manuel de chaque moyen de retenue ajustable. De plus, les arbres rotatifs peuvent s'étendre dans des trous pratiqués dans la base du dispositif incurvé stationnaire.

Dans un mode avantageux de réalisation, les moyens de retenue ajustables sont montés pivotants dans les ouvertures des passages sur les arbres, de sorte que des dispositifs de réglage éloignés peuvent faire pivoter les arbres pour contrôler la quantité de matière extrudée.

Le cylindre rotatif peut comporter une première paroi d'extrémité qui en est solidaire en rotation, l'appareil comportant de plus une seconde paroi d'extrémité qui ne tourne pas avec le cylindre, mais qui est en contact d'étanchéité avec lui, le dispositif incurvé stationnaire étant monté sur la seconde paroi d'extrémité.

Le tube s'étend avantageusement à travers et est fixé sur la seconde paroi d'extrémité, et est pourvu, à l'intérieur du cylindre rotatif, d'ouvertures pour amener la matière d'extrusion à l'intérieur du cylindre rotatif. De plus, ledit tube comporte une paroi d'extrémité montée sur le dispositif incurvé stationnaire au voisinage de ladite première paroi d'extrémité.

Par ailleurs, lesdits orifices d'extrusion comportent des filières d'extrusion amovibles.

On voit ainsi que, grâce à l'invention, on obtient un appareil simple, peu coûteux et facile à entretenir. De plus, on voit que dans la présente invention, l'épaisseur de la portion extrudée peut être modifiée au moyen de réglages simples, et la forme de l'extrudat est commandée par des filières externes qui peuvent être facilement remplacées par des filières fournissant un extrudat d'une forme différente.

D'autres caractéristiques et avantages de l'invention apparaitront au cours de la description qui va suivre, faite en se référant aux dessins annexés donnés uniquement à titre d'exemples et dans lesquels:

la Fig. 1 est une vue en élévation de face d'un appareil d'extrusion suivant l'invention;

la Fig. 2 est une vue de face en coupe de l'appareil représenté à la Fig. 1;

la Fig. 3 est une vue en élévation latérale du côté de droite de l'appareil représenté à la Fig. 1;

la Fig. 4 est une vue en coupe suivant la ligne 4—4 de la Fig. 1;

la Fig. 5 est une vue en plan de dessus du dispositif d'extrusion dans l'appareil d'extrusion;

la Fig. 6 est une vue en plan de dessus d'un élément de retenue pour commander un écoulement;

la Fig. 7 est une vue en coupe suivant la ligne 7—7 de la Fig. 5;

la Fig. 8 est une vue en coupe suivant la ligne 8—8 de la Fig. 5;

la Fig. 9 est une vue en coupe suivant la ligne 9—9 de la Fig. 5;

la Fig. 10 est une vue en coupe suivant la ligne 10—10 de la Fig. 5;

la Fig. 11 est une vue en coupe suivant la ligne 11—11 de la Fig. 5;

la Fig. 12 est une vue en coupe suivant la ligne 12—12 de la Fig. 5;

la Fig. 13 est une vue en coupe suivant la ligne 13—13 de la Fig. 5;

la Fig. 14 est une vue en élévation et en bout suivant la ligne 14—14 de la Fig. 5;

la Fig. 15 est une vue en coupe suivant la ligne 15—15 de la Fig. 14.

En se référant maintenant au dessin en détails, on a représenté un ensemble de cylindre extrudeur suivant la présente invention, destiné à être utilisé pour la fabrication de galettes-sandwichs garnies d'un glaçage à la crème. L'ensemble comprend d'une façon générale un cylindre rotatif creux 10 ayant plusieurs orifices d'extrusion 11, un ensemble 12 de tube de remplissage s'étendant axialement dans le cylindre 10, et un dispositif stationnaire 14 d'extrusion disposé à l'intérieur du cylindre pour forcer la matière de garniture hors du cylindre à travers les orifices d'extrusion.

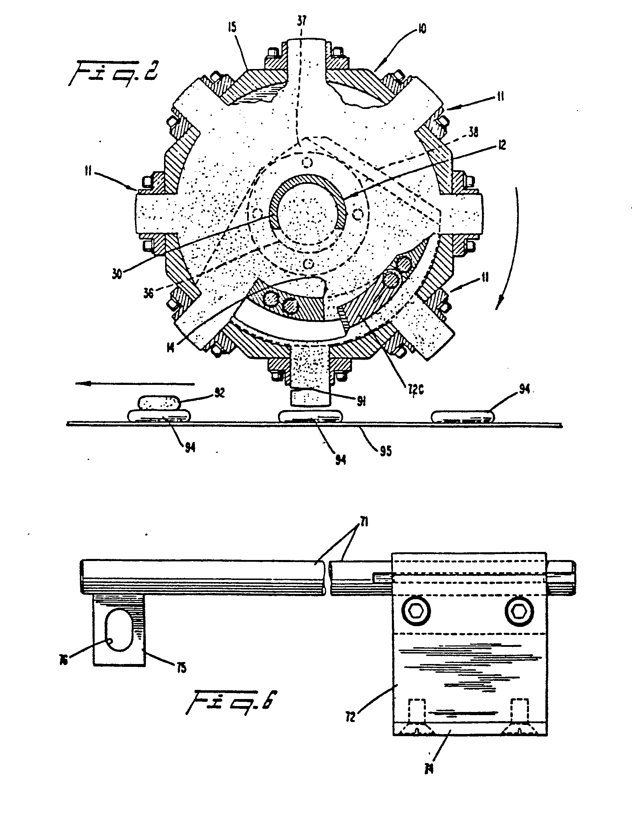

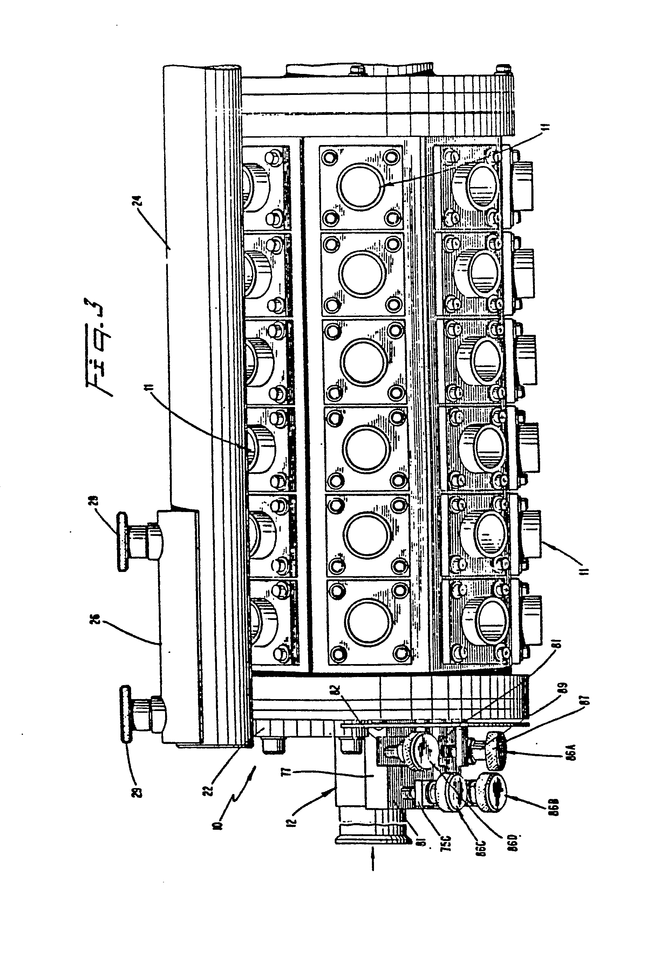

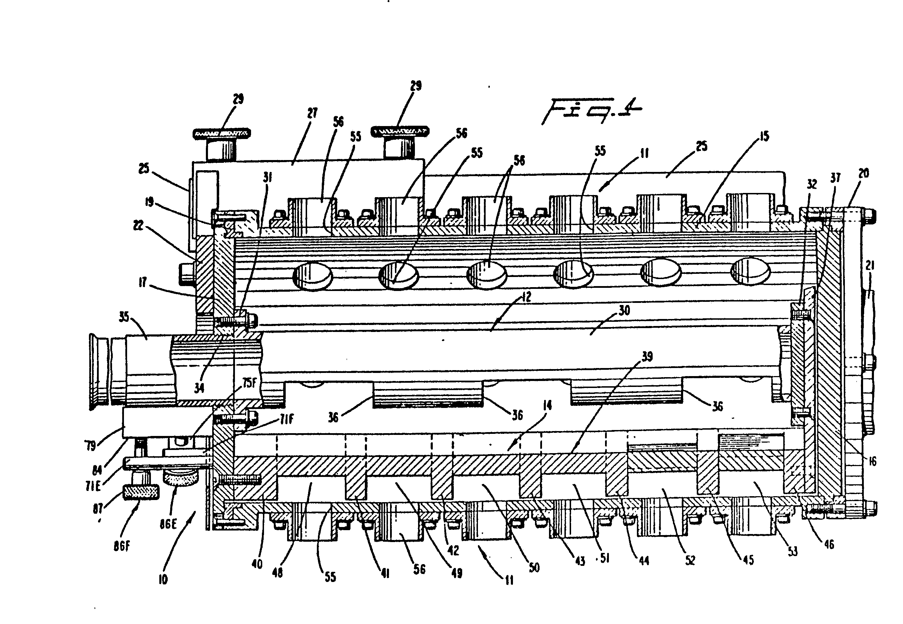

Le cylindre creux 10 comprend une partie de paroi cylindrique 15, une paroi interne d'extrémité 16 qui est fixée sur la partie 15, et une paroi d'extrémité externe 17 qui est en butée avec un joint rotatif d'étanchéité 19 porté par la partie 15. La paroi cylindrique 15 est boulonnée sur une bride 20 portée par un arbre mené 21. La paroi d'extrémité externe 17 est stationnaire et est boulonnée sur une plaque de support 22 qui s'étend entre une barre ronde 24 et une barre carrée 25 qui font saillie sur un bâti fixe (non représenté). La plaque 22 présente dans son ensemble une forme allongée ayant une partie incurvée 26 à une extrémité pour coopérer avec la barre ronde 24 et une partie angulaire 27 sur l'autre extrémité pour coopérer avec la barre carrée 25. Les parties 26 et 27 s'étendent le long des barres 24, 25 (Fig. 4) et sont fixées sur celles-ci par des vis à tête 29, qui s'étendent à travers lesdites parties dans des trous filetés ménagés dans les barres. Les vis 29 présentent de grandes têtes molletées pour leur mise en place et leur enlèvement manuel.

L'ensemble 12 de tube de remplissage comprend un tube interne 30 ayant une collerette 31 sur une extrémité et une plaque 32 fermant l'autre extrémité. Le tube 30 est boulonné sur la paroi d'extrémité 17 (au moyen de la collerette 31) en alignement avec un trou central fileté 34. Un tube externe 35 de remplissage est vissé dans le trou 34. Le tube externe 35 est relié au moyen de conduites appropriées rigides ou souples à une pompe qui distribue la matière de garniture au cylindre 10, le tube interne 30 comportant trois ouvertures 36 dirigées vers le bas à travers lesquelles le matériau de remplissage s'écoule dans le cylindre 10.

Le dispositif 14 d'extrusion est disposé au-dessous du tube 30 et est monté sur la paroi d'extrémité 17 au moyen de vis. Une plaque semi-circulaire 37 relie l'extrémité libre du dispositif 14 à la plaque 32 montée sur l'extrémité libre du tube 30. La plaque semi-circulaire 37 comporte un bord 38 d'arête en lame de couteau pour faire circuler la matière de garniture qui tend à adhérer à la paroi 16.

En section transversale, le dispositif 14 présente dans son ensemble une forme incurvée, épousant la courbure de la paroi 15 du cylindre. Le dispositif comprend une partie de base 39 qui est espacée de la paroi 15, et une série de portées 40 à 46 en saillie s'étendant depuis la partie de base 39 jusqu'à la surface interne de la paroi 15. Les portées divisent l'espace entre la partie de base 39 et la paroi 15 en une pluralité de passages 48 à 53 qui s'étendent circonférentiellement par rapport à la paroi 15 du cylindre.

La paroi 15 du cylindre est formée au moyen de six rangées circonférentielles d'ouvertures 55, chaque rangée comportant huit ouvertures également espacées autour dela circonférence du cylindre. Chaque rangée d'ouvertures est alignée avec l'un des passages 48—53. Une filière amovible 56 est fixée sur la paroi 15 à chaque ouverture 55 pour réaliser les orifices d'extrusion 11.

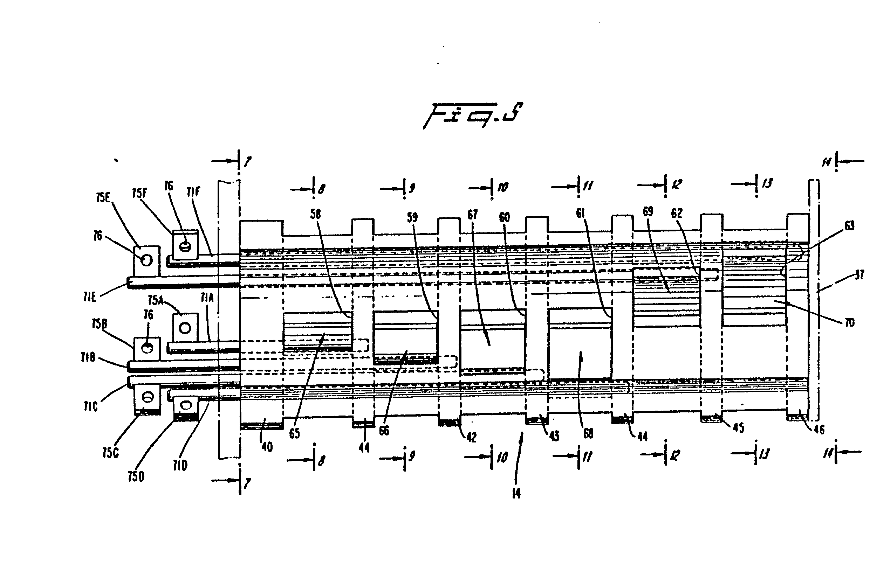

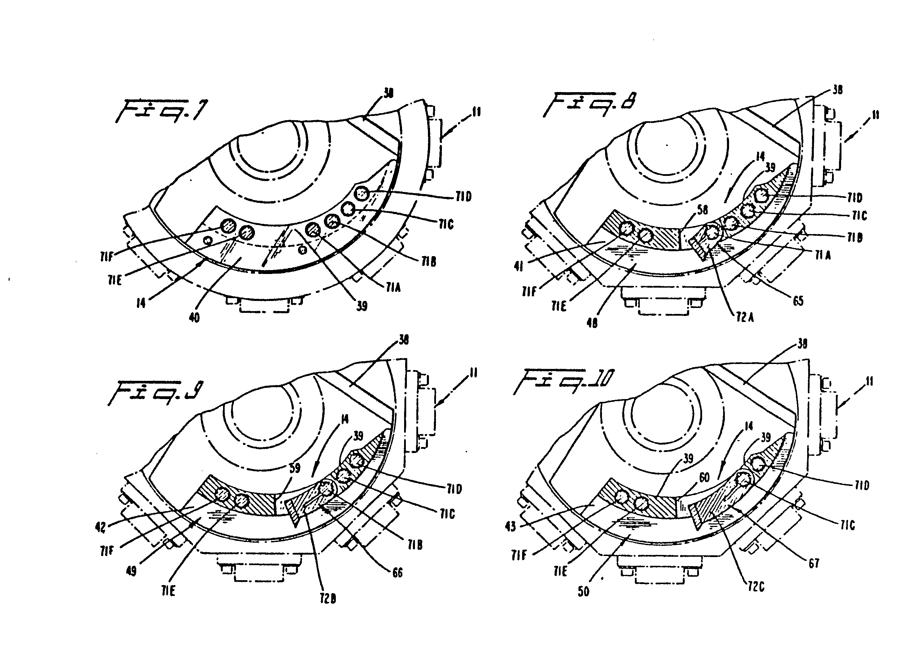

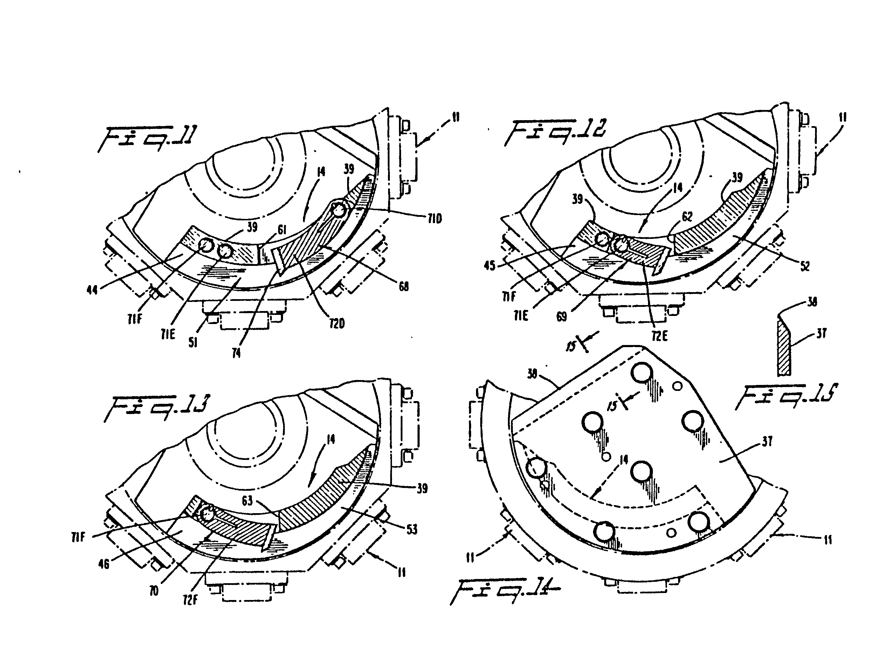

Comme on l'a représenté à la Fig. 5 et aux Fig. 8 à 15, la partie de base 39 comporte des ouvertures 58 à 63, une pour chacun des passages 48 à 53 respectivement, pour recevoir des mécanismes de retenue réglables 65 à 70.

Les mécanismes 65 à 70 de retenue comprennent chacun (comme représenté à la Fig. 6) un arbre 71, un bras 72 monté sur une extrémité de l'arbre et claveté sur celui-ci, une lame 74 montée sur l'extrémité du bras et un levier 75 de commande monté sur l'autre extrémité de l'arbre.

Comme représenté aux Fig. 5 et 8 à 14, les mécanismes 65 à 70 de retenue comprennent des arbres 71A à 71F (respectivement) de longueurs différentes, et des bras 72A à 72F (respectivement) de longueurs différentes.

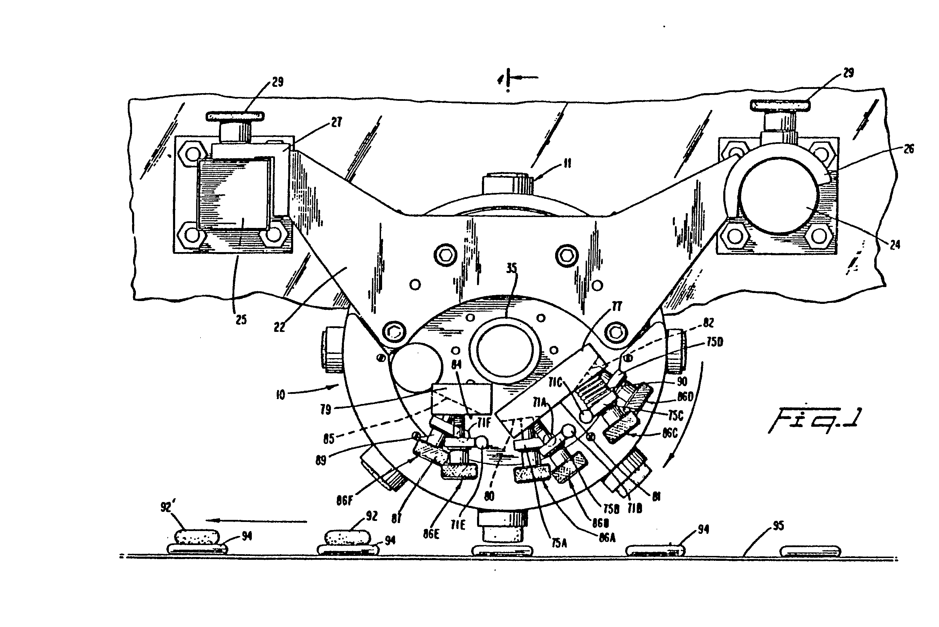

Les arbres 71 s'étendent à travers des alésages parallèles dans la paroi d'extrémité externe 17 et dans la partie de base 39 du dispositif d'extrusion 14. Les leviers de commande 75A à 75F sur les extrémités libres des arbres comportent des trous 76. Comme on l'a mieux représenté aux Fig. 1 et 2, deux blocs 77 et 79 sont fixés sur la face externe de la paroi 17, adjacents aux leviers de commande 75.

Le bloc 77 comporte trois surface planes 80 à 82 qui sont alignées avec les leviers 75A à 75D. Le plan 80 est dirigé vers le levier 75A; le plan 81 est dirigé face aux deux leviers 75B et 75C; et le plan 82 est dirigé vers le levier 75D. Le bloc 79 comporte deux surfaces 84 et 85 qui sont alignées avec les leviers 75E et 75F respectivement. Les plans 80, 81, 82, 84 et 85 comportent des trous filetés dont chacun est aligné avec le trou 76 du levier (ou des leviers) 75 dirigés vers le plan.

Des vis de réglage 86A et 86F s'étendent à travers les trous 76 et sont vissées dans ces trous filetés. Les vis de réglage comportent de grandes têtes molletées 87 et des épaulements 89 pour coopérer avec les leviers 75. Un ressort hélicoïdal 90 est interposé entre chaque levier 75 et son plan associé, avec la vis de réglage 86 s'étendant à travers le ressort hélicoïdal. Seul le ressort 90, disposé entre le levier 75C et le plan 81, est représenté à la Fig. 1. Les autres ressorts 90 ne sont pas représentés à la Fig. 1 (et tous les ressorts 90 sont supprimés dans les autres Fig.) afin de montrer plus clairement l'agencement des vis 86 de réglage.

Les vis de réglage 86C, 86D, 86E et 86F comportent des filetages au pas à droite, tandis que les vis 86A et 86B ont des filetages au pas à gauche. De cette façon, dans tous les mécanismes de retenue réglables, l'intervalle entre l'arête de la lame 74 et la surface interne de la paroi 15 du cylindre est diminué en faisant tourner la vis 86 dans le sens des aiguilles d'une montre et est augmenté en faisant tourner cette vis dans le sens inverse des aiguilles d'une montre.

En fonctionnement, une matière de garniture constituée par une crème plastique molle est pompée dans le cylindre 10 à travers l'ensemble 12 de tube de remplissage. le matériau de garniture qui présente une viscosité entre environ 50 et 1500 Pa.s (50 000 et 1 500 000 centipoises), s'écoule à travers les ouvertures 36 du tube 30 à l'intérieur du cylindre. Le débit de la pompe est réglé pour maintenir le cylindre à l'état presque plein comme représenté à la Fig. 2.

La partie 15 de paroi cylindrique et la paroi d'extrémité interne 16 tournet avec l'arbre mené 21 dans le sens des aiguilles d'une montre en considérant les Fig. 1, 2 et 7 à 13. La matière de garniture en contact avec la surface interne de la paroi 15 est amenée avec la paroi par la trainée due au frottement exercé par la surface de la paroi sur la matière de garniture et par la tendance de la matière à adhèrer à cette surface. La matière de garniture est ainsi amenée dans les passages 48, 53 du dispositif stationnaire 14 où elle rencontre les étranglements formés par les mécanismes de retenue 65, 70 règlables. Ces étranglements gènent l'écoulement continu de la matière dans les passages tandis que la rotation de la paroi 15 continue d'amener de la matière vers l'entrée des passages. Par suite, la matière se trouvant dans les passages subit une augmentation de pression. Par conséquent lorsque les orifices d'extrusion 11 se déplacent le long des passages, la matière de garniture qui ne peut pas s'écouler en franchissant les étranglements est extrudée par les orifices.

Comme représenté à la Fig. 2, lorsque chaque orifice 11 tourne en passant par le point bas de sa révolution, la colonne d'extrudat est coupée par un fil métallique 91 de coupe et les tranches 92 de matière de garniture ainsi formées tombent sur les biscuits inférieurs 94 qui se déplacent devant l'ensemble sur un transporteur 95. Le biscuit supérieur est appliqué pour terminer le sandwich de façon classique.

La quantité de matière extrudée par les orifices 11 dans chaque rangée est commandée par la position du bras 72 dans le passage alimentant cette rangée d'orifices. L'épaisseur de la garniture dans les sandwichs peut être facilement modifiée, d'une faible quantité ou d'une quantité importante, en règlant tous les mécanismes de retenue. Lorsque chacune des filières d'extrusion 56 est identique, les mécanismes de retenue peuvent être règlés l'un par rapport à l'autre pour compenser les différentes caractéristiques d'écoulement inhérentes en différents points à l'intérieur du cylindre et produire ainsi une épaisseur de garniture uniforme pour tous les sandwichs fabriqués.

Bien que toutes les filières 56 représentées au dessin présentent des ouvertures circulaires, il peut être prévu une ou plusieurs rangées circonférentielles d'orifices d'extrusion avec des filières d'une autre configuration. Ainsi des rangées adjacentes de galettes de formes différentes peuvent être fabriquées simultanément. Par exemple, on peut utiliser des filières circulaires sur une rangée circonférentielle, tandis que des filières carrées peuvent être utilisées sur une rangée adjacente, et des filières de forme oblongue sur la rangée suivante. De cette façon, une rangée de galettes sandwichs de forme circulaire ayant une tranche de garniture carrée peut être adjacente à une rangée de galettes sandwichs oblongues comportant une tranche de garniture oblongue, etc. Les différents débits pour chaque rangée différente qui sont dûs aux diverses sections des filières de formes dissemblables sont facilement compensés par le réglage des mécanismes de retenue.

Il ressort de ce qui précède que la présente invention fournit un ensemble perfectionné de cylindre d'extrusion qui est peu couteux, simple, souple et facile à entretenir, qui peut être règlé facilement pour modifier l'épaisseur de la garniture de l'une ou de toutes les rangées de sandwichs fabriqués, qui peut extruder une garniture sous une forme quelconque, et qui peut extruder de la matière de garniture sous différentes formes simultanément, sur des rangées adjacentes de galettes de base.

## Revendications

1. Appareil d'extrusion comprenant:
— un cylindre rotatif creux (10) pourvu d'une pluralité d'orifices d'extrusion (11) espacés circonférentiellement;
— un dispositif incurvé stationnaire (14) disposé dans le cylindre (10);
— un tube (30) agencé pour amener la matière d'extrusion à l'intérieur dudit cylindre creux (10);
caractérisé en ce que:
— le dispositif incurvé stationnaire (14) comporte une base (39) espacée de la paroi interne (15) du cylindre creux (10) et une pluralité de portées en saillie (40—46) qui s'étendent entre la base (39) et la paroi interne (15), les espaces entre des paires adjacentes de portées en saillie (40, 46) définissant des passages (48—53) alignés avec les orifices d'extrusion (11) de manière à amener la matière d'extrusion par rotation du cylindre creux (10) auxdits passages (48—53);
— chacun des passages (48—53) du dispositif incurvé stationnaire est pourvu d'un moyen de retenue (65—70) qui est réglable individuellement, qui est mobile par rapport au dispositif incurvé stationnaire (14) et qui s'étend dans ledit passage de manière à former un étranglement dans ce passage, étranglement variable par déplacement dudit moyen de retenue par rapport au dispositif incurvé stationnaire (14) et servant à accroître la pression de la matière d'extrusion amenée à chacun des passages (48—53) de sorte que la matière d'extrusion est forcée à travers les orifices d'extrusion (11) lorsque ceux-ci passent le long desdits passages (48—53).

2. Appareil selon la revendication 1, caractérisé en ce que le cylindre creux (10) est monté sur un arbre mené (21) de façon à tourner autour de son axe longitudinal.

3. Appareil selon la revendication 1, caractérisé en ce que la base de chacun des passages (48—53) comporte une ouverture (58—63) agencée pour s'adapter au moyen de retenue ajustable (65—70) associé, et chaque moyen de réglage comporte un arbre rotatif (71A—F) relié au moyen de retenue ajustable associé (65—70), cet arbre s'étendant à l'extérieur du cylindre rotatif pour permettre le réglage manuel de chaque moyen de retenue ajustable (65—70).

4. Appareil selon la revendication 3, caractérisé en ce que les arbres rotatifs (71A—F) s'étendent dans des alesages pratiqués dans la base (39) du dispositif incurvé stationnaire (14).

5. Appareil selon la revendication 1, caractérisé en ce que les moyens de retenue ajustables (65—70) sont montés pivotants dans les ouvertures (58—63) des passages (48—53) sur les arbres (71A—F), de sorte que des dispositifs de réglage éloignés (75, 76, 77, 79, 86, 90) peuvent faire pivoter les arbres (71A—F) pour contrôler la quantité de matière extrudée.

6. Appareil selon la revendication 1, caractérisé en ce que le cylindre rotatif (10) comporte une première paroi d'extrémité (16) qui en est solidaire en rotation, l'appareil comportant de plus une seconde paroi d'extrémité (17) qui ne tourne pas avec le cylindre (10) mais qui est en contact d'étanchéité avec lui, le dispositif incurvé stationnaire (14) étant monté sur la seconde paroi d'extrémité (17).

7. Appareil selon la revendication 6, caractérisé en ce que le tube (30) s'étend à travers et est fixé sur la seconde paroi d'extrémité (17), et est pourvu, à l'intérieur du cylindre rotatif (10) d'ouvertures (36) pour amener la matière d'extrusion à l'intérieur du cylindre rotatif (10).

8. Appareil selon la revendication 7, caractérisé en ce que le tube (30) comporte une paroi d'extrémité (32) montée sur le dispositif incurvé stationnaire (14) au voisinage de ladite première paroi d'extrémité (16).

9. Appareil selon la revendication 1, caractérisé en ce que lesdits orifices d'extrusion (11) comportent des filières d'extrusion amovibles (56).

## Patentansprüche

1. Vorrichtung zum Extrudieren mit:
— einem mit am Umfang verteilten Extrudieröffnungen (11) versehenen drehbaren Hohlzylinder (10);
— einer im Zylinder (10) angeordneten, stationären, bogenförmigen Vorrichtung (14);
— einem zum Zuführen des Extrudiermaterials in das Innere des Hohlzylinders (10) vorgesehenen Rohr (30);
dadurch gekennzeichnet, daß:
die stationäre bogenförmige Vorrichtung (14) im Abstand von der Innenwand (15) des Hohlzylinders (10) einen Grundkörper (39) und eine Vielzahl von Vorsprüngen (40—46) umfaßt, die sich zwischen dem Grundkörper (39) und der Innenwand (15) erstrecken, wobei die Räume zwischen aneinanderliegenden Paaren von Vorsprüngen (40, 46) mit den Extrudieröffnungen (11) ausgerichtete Durchgänge (48—53) definieren, sodaß durch Rotation des Hohlzylinders (10) das Extrudiermaterial zu den Durchgängen (46—53) zugeführt wird;
jeder der Durchgänge (48—53) der stationären, bogenförmigen Vorrichtung mit einem Absperrmittel (65—70) versehen ist, das einzeln einstellbar ist, bezüglich der stationären, bogenförmigen Vorrichtung (14) beweglich ist und das sich im Durchgang derart erstreckt, daß eine Einschnürung in diesem Durchgang gebildet wird, die durch Verschieben des Absperrmittels bezüglich der stationären, bogenförmigen Vorrichtung (14) variabel ist und die dazu dient, den Druck des zu den Durchgängen (48—53) zugeführten Extrudiermaterials derart zu erhöhen, daß das Extrudiermaterial durch die Extrudieröffnungen (11) gezwungen wird, wenn diese an den Durchgängen (48—53) vorbeilaufen.

2. Vorrichtung nach Anspruch 1, dadurch gekennzeichnet, daß der Hohlzylinder (10) auf einer angetriebenen Welle (21) derart angebracht ist, daß er um seine Längsachse rotiert.

3. Vorrichtung nach Anspruch 1, dadurch gekennzeichnet, daß der Grundkörper jedes der Durchgänge (48—53) eine sich an das zugeordnete, einstellbare Absperrmittel (65—70) anpassende Öffnung (58—63) umfaßt, und daß jedes Einstellmittel eine mit dem zugeordneten, einstellbaren Absperrmittel (65—70) verbundene Drehachse (71A—F) umfaßt, wobei sich diese Achse außerhalb des drehbaren Zylinders erstreckt, um die Einstellung jedes einstellbaren Absperrmittels (65—70) per Hand zu erlauben.

4. Vorrichtung nach Anspruch 3, dadurch gekennzeichnet, daß die drehbaren Achsen (71A—F) sich innerhalb von im Grundkörper (39) der stationären, bogenförmigen Vorrichtung (14) vorgesehenen Bohrungen erstrecken.

5. Vorrichtung nach Anspruch 1, dadurch gekennzeichnet, daß die einstellbaren Absperrmittel (65—70) schwenkbar in den Öffnungen (58—63) der Durchgänge (48—53) um die Achsen (71A—F) angebracht sind, do saß die entfernt angeordneten Einstellmittel (75, 76, 77, 79, 86, 90) die Achsen (71A—F) schwenken lassen können, um die Menge des Extrudiermaterials zu steuern.

6. Vorrichtung nach Anspruch 1, dadurch gekennzeichnet, daß der drehbare Zylinder (10) eine erste Endwand (16) umfaßt, die fest mit ihm verbunden rotiert, wobei die Vorrichtung weiterhin eine zweite Endwand (17) umfaßt, die sich nicht mit dem Zylinder (10) dreht, die aber in abdichtender Verbindung mit ihm steht, wobei die stationäre, bogenförmige Vorrichtung (14) auf der zweiten Endwand (17) angebracht ist.

7. Vorrichtung nach Anspruch 6, dadurch gekennzeichnet, daß sich das Rohr (30) durch die zweite Endwand (17) erstreckt und an ihr befestigt ist, sowie im Inneren des drehbaren Zylinders (10) mit Öffnungen (36) zum Zuführen des Extrudiermaterials in das Innere des drehbaren Zylinders (10) versehen ist.

8. Vorrichtung nach Anspruch 7, dadurch gekennzeichnet, daß das Rohr (30) eine an der stationären, bogenförmigen Vorrichtung (14) in der Nähe der ersten Endwand (16) angebrachte Endwand (32) umfaßt.

9. Vorrichtung nach Anspruch 1, dadurch gekennzeichnet, daß die Extrudieröffnungen (11) bewegliche Extrudiermundstücke (56) aufweisen.

**Claims**

1. An extrusion apparatus comprising:
a hollow rotatable cylinder (10) having a plurality of circumferentially spaced extrusion ports (11);
a stationary arcuate formation (14) disposed within the cylinder (10);
a pipe (30) arranged to feed extrusion material into the interior of the hollow cylinder (10);
characterized in that:
— the stationary arcuate formation (14) has a base (39) at a distance from the inner wall (15) of said hollow cylinder (10) and a plurality of lands (40—46) extending between the base (39) and the inner wall (15), the spaces between adjacent pairs of lands (40—46) defining passages (48—53) aligned with the extrusion ports (11), such that extrusion material is fed by the rotation of the hollow cylinder (10) into the passages (48—53);
— each of said passages (48—53) of said stationary arcuate formation has an individually adjustable dam mechanism (65—70) movable relative to the stationary arcuate formation (14) and extending into the passage, thereby providing a restriction within said passage, the size of this restriction being variable by movement of the dam mechanism relative to the stationary arcuate formation (14), the restriction serving to increase the pressure of extrusion material fed into the passages (48—53), thereby forcing extrusion material out of the extrusion ports (11) while the latter move along the passages (48—53).

2. Apparatus according to claim 1, characterized in that the hollow cylinder (10) is mounted on a driven shaft (21) so as to rotate about its longitudinal axis.

3. Apparatus according to claim 1, characterized in that each of the passages (48—53) has in its base a recess (58—63) arranged to accommodate the associated adjustable dam mechanism (65—70), and each adjustment device has a rotatable shaft (71A—F) connected to the associated adjustable dam mechanism (65—70), this shaft extending outside the rotatable cylinder to allow manual adjustment of each adjustable dam mechanism (65—70).

4. Apparatus according to claim 3, characterized in that the rotatable shafts (71A—F) extend through bores provided in the base (39) of the stationary arcuate formation (14).

5. Apparatus according to claim 1, characterized in that the adjustable dam mechanisms (65—70) are pivotally mounted within the recesses (58—63) of the passages (48—53) on shafts (71A—F) so that remote adjusting devices (75, 76, 77, 79, 86, 90) may pivot the shafts (71A—F) to control the amount of extruded material.

6. Apparatus according to claim 1, characterized in that the rotatable cylinder (10) has a first end wall (16) mounted for rotation therewith, the apparatus further comprising a second end wall (17) which does not rotate with the cylinder (10) but which is in sealing contact therewith, the stationary arcuate formation (14) being mounted on the second end wall (17).

7. Apparatus according to claim 6, characterized in that the pipe (30) extends through and is fixedly mounted on the second end wall (17), and is provided, inside the rotatable cylinder (10), with openings (36) to feed extrusion material to the interior of the rotatable cylinder (10).

8. Apparatus according to claim 7, characterized in that the pipe (30) has an end wall (32) mounted on the stationary arcuate formation (14) close to the first end wall (16).

9. Apparatus according to claim 1, characterized in that said extrusion ports (11) include removable extrusion dies (56).

Fig.1

0 131 669

*Fig. 2*

*Fig. 6*

2

Fig.3

Fig. 4

Fig.8

Fig.8

Fig.7

Fig.10

Fig.9

0 131 669

Fig.12

Fig.11

Fig.15

Fig.14

Fig.13

7